# EUROPÄISCHE PATENTANMELDUNG

(11) **EP 1 642 699 A2**
(43) Veröffentlichungstag der Anmeldung: **05.04.2006**
(21) Anmeldenummer: 05108186.7
(22) Anmeldetag: 07.09.2005
(51) Int. Cl.: B29C 47/84, B29C 47/38, B29C 45/47

(54) **Vorrichtung zum Plastifizieren von Kunststoff**

(30) Priorität: 30.09.2004 DE 102004048093
(71) Anmelder: Battenfeld Extrusionstechnik GmbH, 32547 Bad Oeynhausen (DE)
(72) Erfinder: Roth, Michael, 32549, Bad Oeynhausen (DE); Düchting, Ralf, 33100, Paderborn (DE)

(57) **Zusammenfassung**

Die Erfindung betrifft eine Kunststoffverarbeitungsmaschine, die mindestens einen Zylinder und eine Schnecke umfasst, deren Drehzahl veränderbar ist, wobei das Schneckenprofil derart ausgelegt ist, dass diese ein annähernd adiabates Verhalten aufweist.

Erfindungsgemäß ist vorgesehen, dass die Ausstoßleistung über die Drehzahl bestimmbar ist.

## Beschreibung

Die Erfindung betrifft eine Kunststoffverarbeitungsmaschine, die mindestens einen Zylinder und eine Schnecke umfasst, deren Drehzahl veränderbar ist, wobei das Schneckenprofil derart ausgelegt ist, dass diese ein annähernd adiabates Verhalten aufweist.

Bekannt sind für das System Einschneckenextruder (ESE) verschiedenste Ausführungen mit unterschiedlichen Schneckenlängen, förderwirksamen Einzugszonen oder glatten Einzugszonen, verschiedenste Schneckengeometrien etc.

Alle diese Ausführungen folgen dem Ziel, eine möglichst hohe Ausstoßleistung bei guter Plastifizierung, Homogenisierung, etc. in der jeweiligen Extruderbaugröße zu erreichen.

Alle diese Konzepte sehen bislang vor, dass eine gewisse Ausstoßleistung mit einer gewissen Extruderbaugröße zu erreichen ist. Diese max. Leistung wurde kontinuierlich für alle Baugrößen erhöht, so dass innerhalb der letzten 10 Jahre die jeweilige Leistung innerhalb einer Baugröße teilweise verdoppelt werden konnte. Trotzdem ist es heute Stand der Technik, dass für eine Ausstoßleistung x eine Extruderbaugröße y ben ötigt wird. Soll die Leistung höher liegen, so ist die nächst höhere Extruderbaugröße zu wählen.

Dies bedingt: Eine einmal projektierte und investierte Maschine bietet im Hinblick auf steigende Leistungen durch Weiterentwicklung von Rohstoffen oder Nachfolge nur eingeschränkte Anpassmöglichkeiten.

Große Ausstoßleistungen bedingen große Maschinen und großen Platzbedarf mit gewissen Handhabungsschwierigkeiten, die jede große Maschine mit sich bringt.

Kleinere Maschinen haben ein kleineres spezifisches Volumen und bilden somit Vorteile bei Farb- und Polymerwechsel.

Sowohl auf Seiten des Maschinenbauers als auch auf Seiten des Verarbeiters ergeben sich Vorteile bei der Ersatzteilhaltung und Beschaffung, weil mehr Gleichteile im Einsatz sind. Dies gilt, wenn ein Großteil des Maschinenparks selbst bei unterschiedlichen Ausstoßleistungen aus den gleichen Extruderbaugrößen bestehen würde.

Die A u f g a b e der Erfindung geht dahin, eine geeignete Maschinenbaugröße zu finden, die in der Lage ist, ein großes Spektrum von Ausstoßleistungen abzudecken. Diese Baugröße sollte allen Ansprüchen der Verarbeitung von Rohstoffen (Neuwaren und Rückstoffen) gerecht werden, ohne aber für kleine Leistungen stark überdimensioniert zu sein.

Die Erfindung wird nun beispielhaft anhand einer Extrusionsmaschine beschrieben, sie ist ebenso bei einer Spritzgießmaschine realisierbar.

Eine der Kernkomponenten eines Extruders ist die Schnecke. Diese soll durch geeignete Maßnahmen so ausgeführt sein, dass sie ein breites Materialspektrum verarbeiten kann.

Zur Findung der am besten geeigneten Extrudergröße ist folgende Überlegung maßgebend:
* Extruder mit glatter Einzugszone bieten den Vorteil, dass diese einen geringeren Verschleiß zeigen, Verarbeitung von Regenerat ermöglichen und relativ viele Materialien verarbeiten lassen.

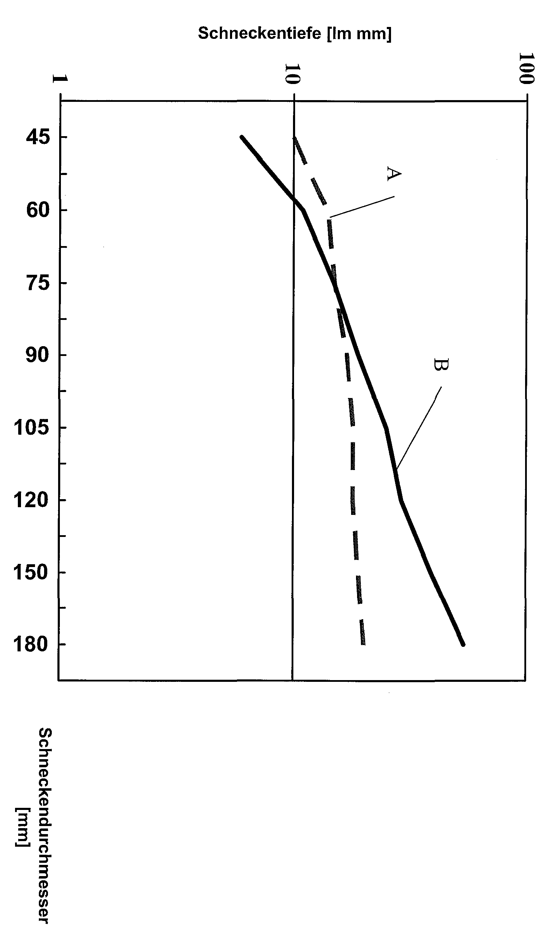

Die Darstellung in der Figur zeigt zwei Graphen, die in einem Koordinatensystem aufgetragen sind, wobei auf der X-Achse der Schneckendurchmesser in mm und auf der Y-Achse die Schneckentiefe in mm (im 10er Logarithmus) aufgetragen ist: Zum einen wird die Gangtiefe dargestellt, die erforderlich ist, um ein Volumen einziehen zu können (Linie A) und zum anderen wird die max. Gangtiefe dargestellt, die erlaubt ist, um das dafür nötige Drehmoment übertragen zu können (Linie B). Für beide Graphen gilt dies in Abhängigkeit zur Extruderbaugröße.

Man erkennt, dass es eine Extruderbaugröße gibt mit einem Durchmesser von ca. 75mm, der auf der einen Seite genügend Volumen zur Verfügung stellt zur Förderung des Materials besonders in der Einzugszone und der verbleibende Schneckenschaft auf der anderen Seite gerade genug Drehmoment übertragen kann. Größere Extruder können somit mehr Drehmoment übertragen als wirklich benötigt wird.

Grundlage für hohe Ausstoßleistungen von kleineren Maschinen ist, dass der Förderstrom über die Drehzahlerhöhung nicht konstant ist, so dass das Material nicht überschert wird, umgekehrt, dass rein über Drehzahlerhöhung eine höhere Ausstoßleistung erreicht werden kann.

In Grundsatzversuchen haben obige Überlegungen sich als richtig erwiesen.

Die L ö s u n g der Aufgabe ist gekennzeichnet durch ein Extruderkonzept, das besagt, dass rein über die Drehzahlerhöhung eines Extruders der Ausstoß bestimmt wird. Adiabates oder annähernd adiabates Verhalten der Schnecke wird erreicht über ein geeignetes Schneckenprofil. Reduktion auf die Extruderbaugröße 75mm zur Abdeckung eines Ausstoßbereiches 100-2500kg/h, wobei die 2500kg/h bisher durch Versuche unterlegt werden können, dies aber noch nicht die max. Leistung darstellt.

Extruderschnecke mit verschiedenen Bereichen mit unterschiedlichem Spiel zwischen Schnecke und Zylinder, so daß das Reibungsverhalten beeinflusst werden kann und für ausreichende Schmierung der Schnecke gesorgt wird.

Schnecke ohne Scher- und Mischteile, weil die Mischwirkung rein über die Drehzahl erreicht werden kann.

Schnecke zusätzlich dadurch gekennzeichnet, dass diese ein Wärmetauschrohr beinhaltet. Dieses ist gebildet durch eine mit einem geeigneten Stopfen versehene Bohrung in der Schnecke. Die Bohrung wird vor dem Verschließen mit dest. Wasser gefüllt und bewirkt einen Wärmetransport von der Kompressionszone der Schnecke hin zum durch das Material gekühlten Einlauf in die Schnecke.

Weiterhin hat dieses Konzept die Möglichkeit, das radiale Spiel zwischen der Schnecke und dem Zylinder unterschiedlich auszuführen, d.h. der Abstand zwischen Schneckenaußendurchmesser und Zylinderinnenwand ist über den gesamten Bereich nicht gleich. Er kann am Anfang klein, in der Mitte groß und zum Ende hin wieder kleiner sein. Er wird individuell zum erforderlichen Prozeß, also der gewünschten Aufgabe, angepaßt.

Reduzierung der Zylinderheiz- und Kühlzonen auf das Minimum. In der Praxis ausgeführt als Zone 1-3 als Heiz-Kühlzone / Zone 4-7 als Heizzone.

Durch entsprechende Steuerungs- und/oder Regeltechnik kann mit diesem Konzept ein Verfahren angeboten werden, bei dem unterschiedliche Ausstoßleistungen mit einer Baureihe erzielt werden. Dies kann beispielsweise durch Änderung der Drehzahl erreicht werden.

Die Vorrichtung sowie das Verfahren können sowohl bei Maschinen in der Extrusionstechnik als auch in der Spritzgießtechnik zum Einsatz gelangen.

## Patentansprüche

1. Kunststoffverarbeitungsmaschine, die mindestens einen Zylinder und eine Schnecke umfasst, deren Drehzahl veränderbar ist,
wobei das Schneckenprofil derart ausgelegt ist, dass diese ein annähernd adiabates Verhalten aufweist,
**dadurch gekennzeichnet, dass**
die Ausstoßleistung über die Drehzahl bestimmbar ist.

2. Kunststoffverarbeitungsmaschine nach Anspruch 1, **dadurch gekennzeichnet, dass** der Durchmesser der Schnecke zwischen 70mm und 80mm, vorzugsweise 75mm beträgt.

3. Kunststoffverarbeitungsmaschine nach Anspruch 2, **dadurch gekennzeichnet, dass** mindestens ein Ausstoßbereich von 100-2500kg/h abgedeckt wird.

4. Kunststoffverarbeitungsmaschine nach Anspruch 3, **dadurch gekennzeichnet, dass** die Schnecke verschiedene Bereiche mit unterschiedlichem Spiel zwischen Schnecke und Zylinder umfasst.

5. Kunststoffverarbeitungsmaschine nach Anspruch 1 bis 4, **dadurch gekennzeichnet, dass** die Schnecke keinen Scher- und Mischteil umfasst.

6. Kunststoffverarbeitungsmaschine nach mindestens einem der vorigen Ansprüche, **dadurch gekennzeichnet, dass** die Schnecke ein Wärmetauschrohr umfasst.

7. Kunststoffverarbeitungsmaschine nach mindestens einem der vorigen Ansprüche, **dadurch gekennzeichnet, dass** die Zylindertemperierung minimiert ist, wobei die Zonen 1 bis 3 als Heiz- und Kühlzonen und die Zonen 4 bis 7 als Heizzonen ausgelegt sind.
